# EUROPÄISCHE PATENTSCHRIFT

(11) **EP 2 025 280 B1**
(45) Veröffentlichungstag und Bekanntmachung des Hinweises auf die Patenterteilung: **05.12.2012**
(21) Anmeldenummer: 08013807.6
(22) Anmeldetag: 01.08.2008
(51) Int. Cl.: F16L 25/00, A47L 9/24, A47L 9/32

(54) **Griffanordnung an einem Staubsaugerschlauch**
Gripping device on a vacuum cleaner hose
Dispositif de prise sur un flexible d'aspirateur

(30) Priorität: 02.08.2007 DE 102007036341
(43) Veröffentlichungstag der Anmeldung: 18.02.2009
(73) Patentinhaber: TRUPLAST KUNSTSTOFFTECHNIK GMBH, D-35428 Langgöns (DE)
(72) Erfinder: Linhart, Georg Peter, 61206 Wöllstadt (DE); Linhart, Christian Norbert, 35428 Langgöns (DE)
(74) Vertreter: Oppermann, Mark

(56) Entgegenhaltungen:
- EP-A1- 0 727 173
- DE-A1- 4 037 889
- JP-A- 7 067 817
- US-A- 5 216 778

## Beschreibung

### TECHNISCHES GEBIET

Die Erfindung bezieht sich auf eine Griffanordnung an einem Staubsaugerschlauch, entsprechend dem Oberbegriff des Anspruchs 1. Bei derartigen Anordnungen sind der Schlauch und die Griffanordnung relativ zueinander verdrehbar, um die Handhabung des Staubsaugers zu ermöglichen bzw. zu erleichtern.

### STAND DER TECHNIK

Bei einer bekannten Griffanordnung dieser Gattung (EP 0 733 336 A2) wird die elektrische Verbindung zwischen elektrischen Leitern des Schlauchs und elektrischen Leitern der Griffanordnung durch am Außenumfang der Innenmuffe des Schlauchs angebrachte Schleifringe und an der Griffanordnung angebrachte Schleifringkontakte hergestellt. Zwar erlaubt diese Ausbildung ein freies Drehen der Griffanordnung um die Innenmuffe des Schlauchs um 360°, jedoch erfordert die Anbringung von Schleifringen und Schleifringkontakten einen erheblichen Fertigungsaufwand, weil Schleifringanordnungen einer sehr genauen Fertigung bedürfen, um sicherzustellen, daß die Schleifringe und die Schleifringkontakte permanent stromleitend in Berührung gehalten werden. Auch muß eine Verschmutzung der Kontaktflächen vermieden werden, was in nicht staubfreier Atmosphäre schwierig sein kann.

Schleifringe werden auch bei einem anderen bekannten Staubsaugerschlauch mit elektrischen Leitern (EP 0 884 019 B1) eingesetzt.

Eine Griffanordnung gemäß des Oberbegriffs von Anspruch 1 ist aus EP 0727173 A1 bekannt.

### AUFGABENSTELLUNG

Der Erfindung liegt die Aufgabe zugrunde eine Griffanordnung der eingangs angegebenen Gattung bereitzustellen, die einen vergleichsweise geringen Fertigungsaufwand erfordert und eine dauerhaft störungsfreie elektrische Verbindung ohne Schleifringe und Schleifringkontakte ermöglicht.

### DARSTELLUNG DER ERFINDUNG

Diese Aufgabe wird erfindungsgemäß durch die Merkmale des Anspruchs 1 gelöst. Vorteilhafte oder zweckmäßige Weiterbildungen der Erfindung sind in den Unteransprüchen angegeben und werden nachfolgend ebenfalls näher beschrieben.

Ausgehend von der eingangs angegebenen Griffanordnung ist die erfindungsgemäße Griffanordnung dadurch gekennzeichnet, daß die elektrischen Leiter aus dem Schlauch und der Innenmuffe in etwa radialer Richtung durch eine Öffnung des Griffrohrs hindurch nach außen in den Hohlraum eines Griffteils geführt sind, welches an das schlauchseitige Ende des Griffrohrs angeschlossen ist, daß die elektrischen Leiter unter Bildung einer Längenvorratsschleife im Griffteil festgelegt sind, daß am Außenumfang der Innenmuffe ein Aufnahmeraum vorgesehen ist, welcher der Öffnung des Griffrohrs gegenüberliegt und in welchen bei Relativdrehungen zwischen dem Schlauch und dem Griffrohr elektrische Leiter aus der Längenvorratsschleife verlagerbar sind, und daß der Drehwinkel zwischen dem Schlauch und dem Griffrohr nach Maßgabe der Leiterlänge in der Längenvorratsschleife durch Anschläge begrenzt ist.

Die Erfindung geht von der Beobachtung aus, daß ein Drehwinkel zwischen dem Schlauch und der Griffanordnung von 360° in der Praxis nicht erforderlich ist und daß ein Drehwinkel von beispielsweise etwa 180° ausreichend ist. Dieser Drehwinkel läßt sich auf die erfindungsgemäße Weise ohne Einsatz von Schleifringanordnungen realisieren. Es wurde gefunden, daß eine aus den Leitern selbst gebildete und auf die angegebene Weise angeordnete Längenvorratsschleife für den angegebenen Drehwinkel völlig ausreichend ist, wobei die elektrischen Leiter am Übergang zwischen Schlauch und Griffanordnung unterbrechungslos ohne Kontaktstelle durchgehend angeordnet sind.

Der Aufnahmeraum am Umfang der Innenmuffe nimmt bei Relativdrehungen zwischen Schlauch und Griffanordnung die Leiter knicklos auf. Die Leiter werden ebenfalls ohne Abknickungen in die Ruheposition der Längenvorratsschleife zurückgeführt, wenn Griffanordnung und Schlauch ihre Ausgangsrelativlage wieder erreicht haben. Die in beiden Drehrichtungen wirksamen Anschläge verhindern eine Überdehnung oder Streckung der elektrischen Leiter, die auch in den Anschlagpositionen eine gebogene Stellung einnehmen, welche die Rückkehr in die Ruheposition der Längenvorratsschleife begünstigt. Dabei stützen sich die elektrischen Leiter an ihrer Festlegungsstelle im Griffteil ab.

In Weiterführung des Erfindungsgedankens ist entsprechend Anspruch 2 das Griffteil aus zwei Halbschalen geformt, die einerseits das Griffrohr an dessen schlauchseitigem Ende partiell eng umschließen und andererseits auch an das andere Ende des Griffrohrs angeschlossen sind, wobei die beiden Halbschalen einen über das Griffteil durchgehenden Hohlraum bilden, durch welchen die elektrischen Leiter geführt und in der Nähe des Griffrohrs durch einen Kabelhalter festgelegt sind. Griffrohr und Griffteil bilden hierbei nach der Montage eine einteilige Griffanordnung, die relativ zum daran angeschlossenen Schlauch begrenzt drehbar ist. Dabei kann nach Anspruch 3 das Griffrohr, das im Bereich der eingeführten Innenmuffe zylindrisch ausgebildet ist, daran anschließend bogenförmig ausgebildet sein, beispielsweise als 90°-Bogen.

Vorzugsweise ist die Wandöffnung des Griffrohrs entsprechend Anspruch 4 als etwa um den halben Umfang des Griffrohrs durchgehende schlitzförmige Aussparung ausgebildet, deren Endflächen in der Ausgangsrelativlage von Griffanordnung und Schlauch etwa diametral gegenüberliegend vorgesehen sind.

Der Aufnahmeraum für die elektrischen Leiter am Außenumfang der Innenmuffe ist gemäß Anspruch 5 zweckmäßig so ausgebildet, daß er in axialer Richtung von zwei voneinander beabstandeten flanschartigen Ringvorsprüngen der Innenmuffe und in radialen Richtungen außen durch die Innenwandfläche des Griffrohrs und innen durch die Außenumfangsfläche der Innenmuffe begrenzt ist.

Die drehfeste Anbringung der Innenmuffe an dem Schlauchende erfolgt bei einem Schlauch, der in an sich bekannter Weise außen nach Art eines Außengewindes schraubenlinienförmig verlaufende Wellenberge und Wellentäler aufweist, nach Anspruch 6 zweckmäßig so, daß dem einen Ringvorsprung der auf die Innenmuffe aufgeschobene Schlauch durch eine auf den Schlauch aufgeschraubte Gewindehülse angepreßt ist, die den Ringvorsprung übergreift und welche ein radial nach außen weisendes Anschlagelement aufweist. Die Gewindehülse weist hierbei einen Innengewindeabschnitt auf, welcher in Abmessungen und Steigung dem durch die Wellenberge und Wellentäler gebildeten Außengewinde des Schlauches angepaßt ist.

In weiterer Ausbildung der erfindungsgemäßen Griffanordnung befindet sich, wie im Anspruch 7 angegeben, das Anschlagelement der Gewindehülse innerhalb der Wandöffnung des Griffrohrs, wobei die beiden Endflächen der Wandöffnung die den Drehwinkel zwischen dem Schlauch und dem Griffrohr begrenzenden Anschlagflächen für das Anschlagelement sind.

Zweckmäßig befinden sich die elektrischen Leiter des Schlauchs entsprechend Anspruch 8 vor Eintritt in die Innenmuffe in einem Rohr, das in die Wandöffnung des Griffrohrs hineinreicht und in einen Aufnahmekanal der Innenmuffe eingelegt ist, der sich in axialer Richtung erstreckt und nach außen offen in die Wand der Innenmuffe eingeformt ist.

Für die Abdichtung zwischen der Innenmuffe und dem relativ dazu begrenzt drehbaren Griffrohr ist entsprechend Anspruch 9 vorgesehen, daß die Innenmuffe an ihrem dem Schlauch abgelegenen Ende eine Ringstufe aufweist, auf welcher ein Lippendichtring aufgenommen ist, dessen Dichtlippe der Innenwandfläche des Griffrohrs anliegt.

### KURZE BESCHREIBUNG DER ZEICHNUNGEN

Weitere Einzelheiten der Erfindung werden anhand der ein bevorzugtes Ausführungsbeispiel darstellenden Zeichnungen näher erläutert. Darin zeigt:
- Fig. 1: eine Seitenansicht der Griffanordnung mit abgebrochen dargestelltem Staubsaugerschlauch,
- Fig. 2: die Anordnung gemäß Fig. 1, jedoch in Längsschnittdarstellung,
- Fig. 3: eine gegenüber Fig. 2 vergrößert dargestellte Längsschnitteinzelheit der Anordnung,
- Fig. 4: den Querschnitt durch die Anordnung entsprechend der Schnittverlaufslinie IV-IV in Fig. 2, aus welchem die Ausgangsrelativlage der Innenmuffe zum Griffrohr ersichtlich ist,

- Fig. 5: einen Querschnitt entsprechend der Fig. 4, jedoch mit einer gegenüber dem Griffrohr um etwa 90° in die eine Drehrichtung bis zur Anschlagposition gedrehten Innenmuffe,
- Fig. 6: einen Querschnitt entsprechend Fig. 4, jedoch mit einer gegenüber dem Griffrohr um etwa 90° in die andere Drehrichtung bis zur Anschlagposition gedrehten Innenmuffe und
- Fig. 7: einen Schnitt durch die Anordnung entsprechend der abknickenden Schnittverlaufslinie VII-VII in Fig. 2.

Die Zeichnungen sind zur Verdeutlichung von Einzelheiten und Funktionszusammenhängen in unterschiedlichen Maßstäben dargestellt.

### DETAILLIERTE BESCHREIBUNG DES AUSFÜHRUNGSBEISPIELS

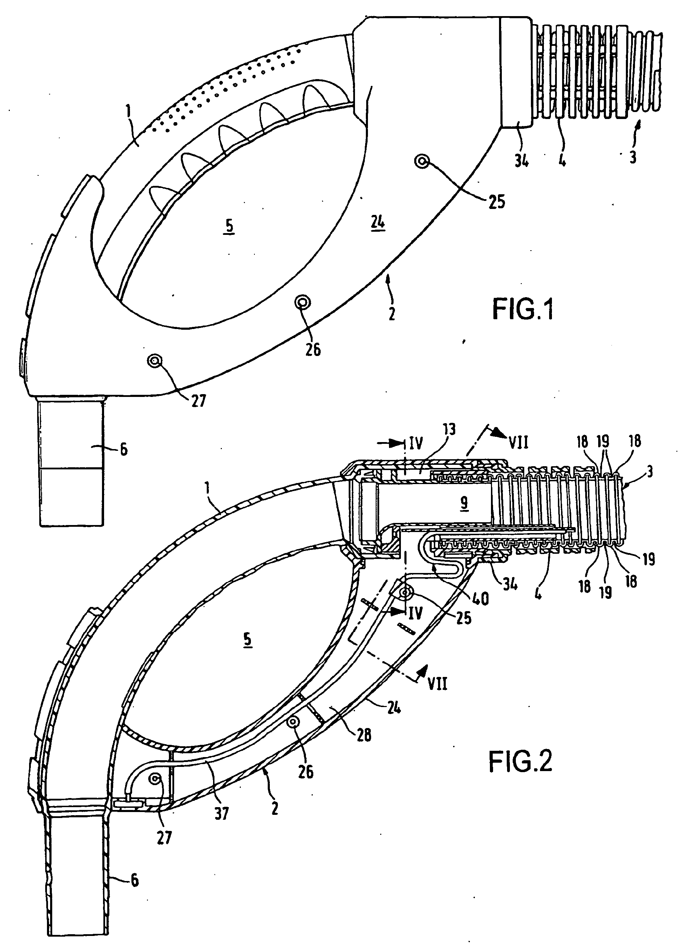

Von der Griffanordnung sind aus Fig. 1 von außen nur wenige Teile zu erkennen, nämlich das Griffrohr 1, das Griffteil 2, der Staubsaugerschlauch 3 und ein an die Griffanordnung anschließender käfigartiger Knickschutz 4 für den Staubsaugerschlauch 3. Das Griffrohr 1 ist bogenförmig als Handgriff ausgebildet und beschreibt einen Bogen von etwa 90°. Das Griffteil 2 ist ebenfalls als Bogen geformt, allerdings der Bogenform des Griffrohrs 1 entgegengesetzt, so daß zwischen dem Griffrohr 1 und dem Griffteil 2 eine Durchgriffsöffnung 5 gebildet ist. Das Griffteil 2 ist einerseits an das schlauchseitige Ende des Griffrohrs 1 angeschlossen und andererseits auch an das andere Ende des Griffrohrs 1, welches in einen Anschlußstutzen 6 für eine Düse (nicht gezeigt) oder ein Verbindungsrohr (nicht gezeigt) zu einem elektrisch betriebenen Bodenbearbeitungsgerät od. dgl. (nicht gezeigt) übergeht.

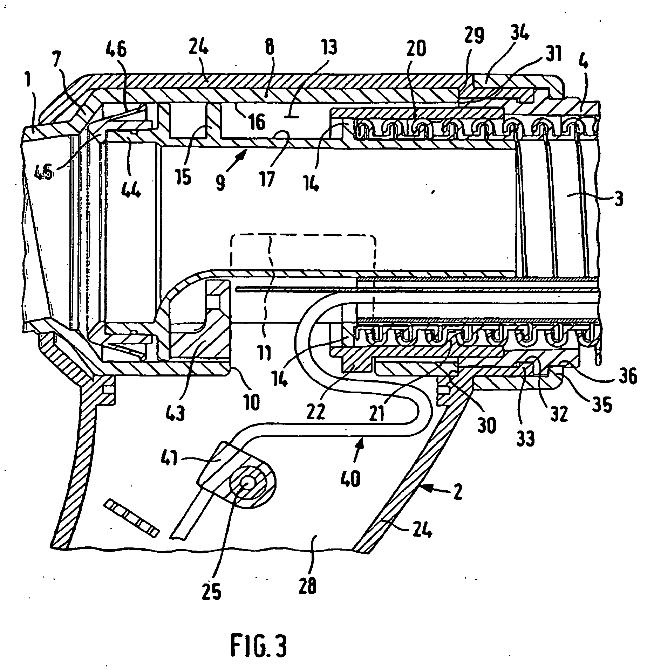

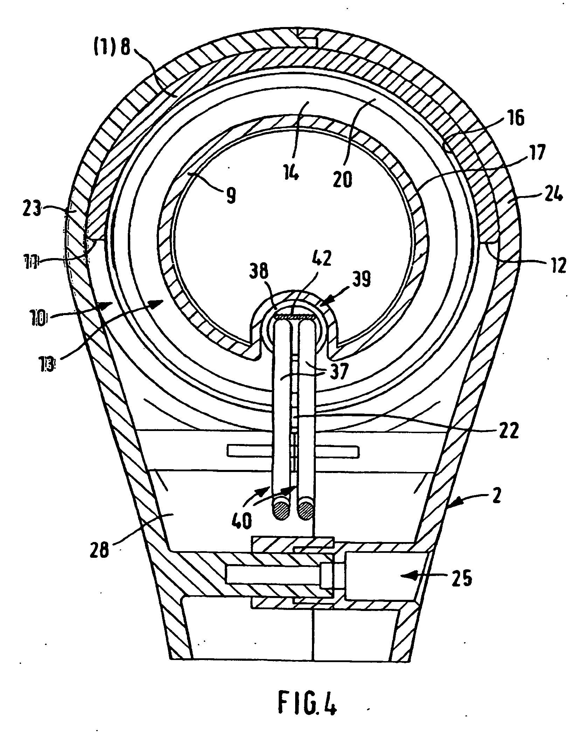

Wie insbesondere aus den Fig. 2 und 3 hervorgeht, erweitert sich das Griffrohr 1 an einem konischen Übergang 7 zu einem zylindrischen Endabschnitt 8 größeren Durchmessers, in welchen die Innenmuffe 9 eingeführt ist. In dem Endabschnitt 8 des Griffrohrs 1 ist eine Wandöffnung 10 vorgesehen, die als etwa um den halben Umfang des Griffrohrs 1 durchgehende breite schlitzförmige Aussparung ausgebildet ist. Die Endflächen 11 und 12 (Fig. 3, 4) der Wandöffnung 10 sind in der Ausgangsrelativstellung von Griffanordnung und Schlauch 3 etwa diametral gegenüberliegend angeordnet (Fig. 4).

Am Außenumfang der Innenmuffe 9 ist ein Aufnahmeraum 13 vorgesehen, welcher der Wandöffnung 10 gegenüberliegt und in axialer Richtung von zwei voneinander beabstandeten flanschartigen Ringvorsprüngen 14 und 15 und in den radialen Richtungen außen durch die Innenwandfläche 16 des zylindrischen Endabschnitts 8 des Griffrohrs 1 und innen durch die Außenumfangsfläche 17 der Innenmuffe 9 begrenzt ist. Die Funktion des Aufnahmeraums 13 wird nachstehend noch näher erläutert werden.

Der Staubsaugerschlauch 3 weist in üblicher Weise nach Art eines Außengewindes schraubenlinienförmig verlaufende und einander abwechselnde Wellenberge 18 und Wellentäler 19 auf. Der Schlauch 3 ist auf die Innenmuffe 9 bis zur Anlage an den Ringvorsprung 14 aufgeschoben und wird durch eine auf den Schlauch 3 aufgeschraubte Gewindehülse 20 an den Ringvorsprung 14 angepreßt, wodurch der Schlauch 3 unverdrehbar an der Innenmuffe 9 befestigt ist, so daß sich diese zusammen mit dem Schlauch 3 relativ zum Griffrohr 1 drehen kann. Die Gewindehülse 20 weist beispielsweise einen vollständigen Innengewindegang 21 auf, welcher die Steigung des aus den Wellenbergen 18 und Wellentälern 19 gebildeten Außengewindes am Schlauch 3 besitzt und in Fig. 3 im Schnitt dargestellt ist.

Die Gewindehülse 20 übergreift den Ringvorsprung 14 und besitzt an ihrer äußeren Umfangsfläche ein radial nach außen weisendes Anschlagelement 22 auf, welches sich innerhalb der Wandöffnung 10 befindet, wie Fig. 3 verdeutlicht. Die beiden Endflächen 11 und 12 der Wandöffnung 10 bilden die den möglichen Drehwinkel zwischen der Innenmuffe 9 und dem Griffrohr 1 begrenzenden Anschlagflächen für das Anschlagelement 22.

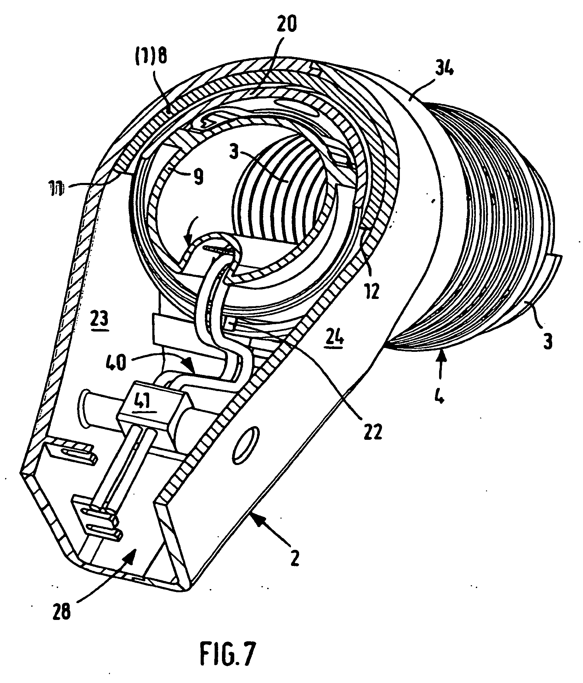

Das Griffteil 2 ist aus zwei Halbschalen 23 und 24 geformt, die das Griffrohr 1 und seinen zylindrischen Endabschnitt 8 partiell eng umschließen, wie die Fig. 2 bis 7 verdeutlichen. Die Griffschalen 23, 24 sind auch an das andere Ende des Griffrohrs 1 angeschlossen (Fig. 1, 2), sind miteinander an Befestigungsstellen 25 bis 27 fest verbunden und bilden einen über das Griffteil 2 durchgehenden Hohlraum 28.

Wie Fig. 3 verdeutlicht liegen die beiden Halbschalen 23, 24, von denen aus dieser Figur nur die Halbschale 24 ersichtlich ist, mit einer Ringstufe 29 der Endstirnfläche 30 des zylindrischen Endabschnitts 8 des Griffrohrs 1 an. Auch der Knickschutz 4 liegt mit seinem inneren Ende 31, welches die Gewindehülse 20 übergreift, der Endstirnfläche 30 an. In dem Knickschutz 4 befindet sich eine Umfangsnut 32, in welche ein umlaufender an beiden Halbschalen 23, 24 befindlicher Vorsprung 33 eingreift. Ein Rastring 34 ist auf das schlauchseitige Ende der beiden Halbschalen 23, 24 aufgeschoben und mit einem radial nach innen gerichteten Vorsprung 35 mit einer zugeordneten Nut 36 am Umfang des Knickschutzes 4 verrastet.

Aufgrund dieser Ausbildung und Anordnung der ineinandergreifenden Teile der Griffanordnung sind die Innenmuffe 9, der Schlauch 3, der Knickschutz 4 und die Gewindehülse 20 gemeinsam relativ zu dem Griffrohr 1 mit seinem zylindrischen Endabschnitt 8, dem Griffteil 2 und dem Rastring 34 drehbar angeordnet. Die Innenmuffe 9 mit dem Schlauch 3, dem Knickschutz 4 und der Gewindehülse 20 sind jedoch gegenüber dem Griffrohr 1, dem Griffteil 2 und dem Rastring 34 axial unverschiebbar festgelegt.

Durch den Schlauch 3 sind elektrische Leiter 37 geführt, die sich vor Eintritt in die Innenmuffe 9 in einem Rohr 38 befinden, das in die Wandöffnung 10 des zylindrischen Endabschnitts 8 des Griffrohrs 1 hineinreicht, wie insbesondere aus Fig. 3 hervorgeht. Das Rohr 38 ist in einen Aufnahmekanal 39 der Innenmuffe 9 eingelegt, der sich in axialer Richtung erstreckt und radial nach außen offen in die Wand der Innenmuffe 9 eingeformt ist.

Die elektrischen Leiter 37 sind aus dem Schlauch 3 und der Innenmuffe 9, präziser ausgedrückt aus dem in dem Aufnahmekanal 39 der Innenmuffe 9 eingelegten Rohr 38, in etwa radialer Richtung durch die Wandöffnung 10 des Griffrohrs 1, genauer ausgedrückt des zylindrischen Endabschnitts 8 des Griffrohrs 1, hindurch nach außen in den Hohlraum 28 des Griffteils 2 geführt und sind dort unter Bildung einer etwa S-förmigen Längenvorratsschleife 40 durch einen Kabelhalter 41 festgelegt, der an der Befestigungsstelle 25 angebracht ist.

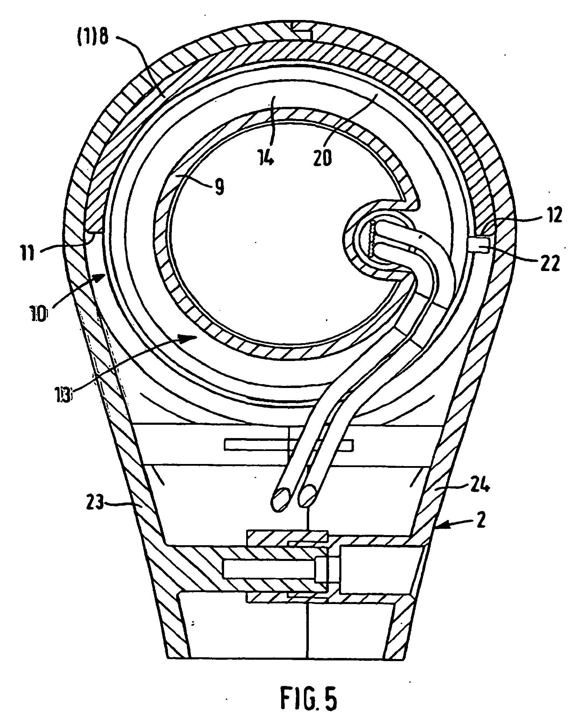

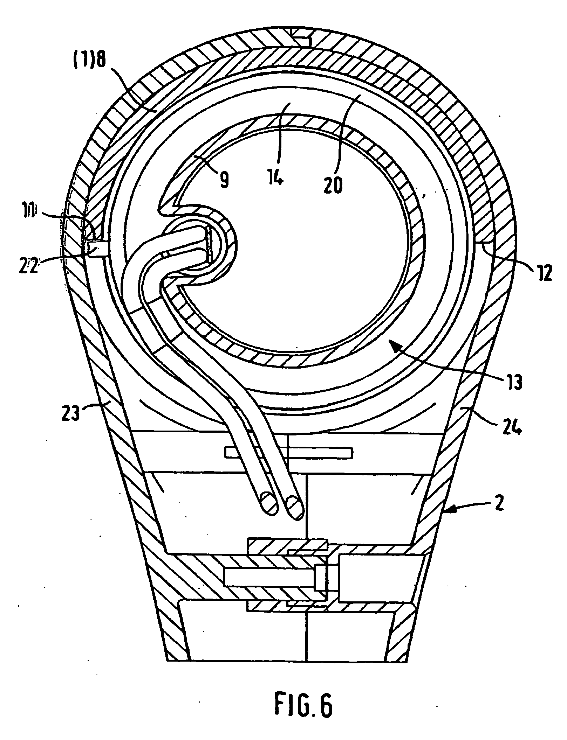

Bei Relativdrehungen zwischen dem Schlauch 3 einschließlich der damit drehfest verbundenen Teile gegenüber dem Griffrohr 1 einschließlich der damit verbundenen Teile werden die elektrischen Leiter 37 aus der Längenvorratsschleife 40 partiell in den Aufnahmeraum 13 verlagert, wie in den Fig. 5 und 6 gezeigt ist. Diese Figuren veranschaulichen auch den in beiden Drehrichtungen maximal möglichen Drehwinkel, bei welchem das Anschlagelement 22 entweder der Endfläche 11 (Fig. 6) oder der Endfläche 12 (Fig. 5) der Wandöffnung 10 anliegt.

Die elektrischen Leiter 37 sind nach dem Kabelhalter 41 durch den Hohlraum 28 des Griffteils 2 geführt, wie aus Fig. 2 hervorgeht, und können am Ende des Hohlraums 28 auf geeignete Weise mit zu den elektrischen Verbrauchern geführten Leitern verbunden werden. Durch den Schlauch 3 ist parallel zu den elektrischen Leitern 37 ein Zugentlastungsstrang 42 geführt, der mit einem an der Innenmuffe 9 angebrachten Zugentlastungselement 43 (Fig. 3) zu verbinden ist (nicht dargestellt).

Wie am deutlichsten aus Fig. 3 hervorgeht weist die Innenmuffe 9 an ihrem dem Schlauch 3 abgelegenen Ende eine Ringstufe 44 auf. Die Ringstufe 44 nimmt einen Lippendichtring 45 auf, dessen Dichtlippe 46 der Innenwandfläche 16 des zylindrischen Endabschnitts 8 des Griffrohrs 1 anliegt und somit für eine Abdichtung des Unterdruckraums gegenüber der Außenatmosphäre sorgt.

Das Griffrohr 1, das Griffteil 2, der Knickschutz 4 und die Gewindehülse 20 können aus thermoplastischen Kunststoffen geeigneter Festigkeit durch Spritzformung hergestellt sein.

Vorgeschlagen wird eine Griffanordnung an einem Staubsaugerschlauch 3, der außen nach Art eines Außengewindes schraubenlinienförmig verlaufende Wellenberge 18 und Wellentäler 19 aufweist. Die Griffanordnung ist jedoch auch für Schläuche anwendbar, deren der Schlauchelastizität dienende Wellenberge und Wellentäler aufgrund eines anderen Herstellungsverfahrens nicht schraubenlinienförmig verlaufen, sondern als alternierende Ringe angeordnet sind. An einem Ende des Schlauchs 3 ist eine Innenmuffe 9 auf geeignete Weise gegenüber dem Schlauch 3 unverdrehbar befestigt und in eine Griffrohr 1 eingeführt und ist darin drehbar aber axial unverschiebbar festgelegt. Aus Schlauch 3 und Innenmuffe 9 sind elektrische Leiter 37 radial durch eine Wandöffnung des Griffrohrs 1 hindurch und in den Hohlraum 28 eines Griffteils 2 eingeführt. Das Griffteil 2 ist mit beiden Enden fest mit dem Griffrohr 1 verbunden. Die elektrischen Leiter 37 sind unter Bildung einer Längenvorratsschleife 40 im Hohlraum 28 festgelegt. An der Innenmuffe 9 ist ein Aufnahmeraum 13 vorgesehen, in welchen elektrische Leiter 37 aus der Längenvorratsschleife 40 verlagert werden, wenn Relativdrehungen zwischen Schlauch 3 und Griffrohr 1 erfolgen. Der mögliche Drehwinkel ist dabei durch Anschläge nach Maßgabe der in der Längenvorratsschleife 40 verfügbaren Leiterlänge begrenzt.

### BEZUGSZAHLENLISTE

- 1: Griffrohr
- 2: Griffteil
- 3: Staubsaugerschlauch
- 4: Knickschutz
- 5: Durchgriffsöffnung
- 6: Anschlußstutzen
- 7: Konischer Übergang
- 8: Zylindrischer Endabschnitt
- 9: Innenmuffe
- 10: Wandöffnung
- 11: Endfläche
- 12: Endfläche
- 13: Aufnahmeraum

- 14: Ringvorsprung
- 15: Ringvorsprung
- 16: Innenwandfläche
- 17: Außenumfangsfläche
- 18: Wellenberge
- 19: Wellentäler
- 20: Gewindehülse
- 21: Innengewindegang
- 22: Anschlagelement
- 23: Halbschale
- 24: Halbschale
- 25: Befestigungsstelle
- 26: Befestigungsstelle
- 27: Befestigungsstelle
- 28: Hohlraum
- 29: Ringstufe
- 30: Endstirnfläche
- 31: Inneres Ende
- 32: Umfangsnut
- 33: Vorsprung
- 34: Rastring
- 35: Vorsprung
- 36: Nut
- 37: Elektrische Leiter
- 38: Rohr
- 39: Aufnahmekanal
- 40: Längenvorratsschleife
- 41: Kabelhalter
- 42: Zugentlastungsstrang
- 43: Zugentlastungselement
- 44: Ringstufe
- 45: Lippendichtring
- 46: Dichtlippe

## Patentansprüche

1. Griffanordnung an einem Staubsaugerschlauch, mit einer an einem Ende des Schlauchs (3) gegenüber dem Schlauch (3) unverdrehbar angebrachten Innenmuffe (9) und mit einem Griffrohr (1), in welches die Innenmuffe (9) eingeführt und darin abgedichtet und drehbar aber axial unverschiebbar festgelegt ist, wobei eine elektrische Verbindung zwischen elektrischen Leitern (37) des Schlauchs (3) und elektrischen Leitern der Griffanordnung auch bei Relativdrehungen zwischen dem Schlauch (3) und dem Griffrohr (1) vorhanden ist, **dadurch gekennzeichnet,**
**daß** die elektrischen Leiter (37) aus dem Schlauch (3) und der Innenmuffe (9) in etwa radialer Richtung durch eine Wandöffnung (10) des Griffrohrs (1) hindurch nach außen in den Hohlraum (28) eines Griffteils (2) geführt sind, welches an das schlauchseitige Ende des Griffrohrs (1) angeschlossen ist,
**daß** die elektrischen Leiter (37) unter Bildung einer Längenvorratsschleife (40) im Griffteil (2) festgelegt sind,
**daß** am Außenumfang der Innenmuffe (9) ein Aufnahmeraum (13) vorgesehen ist, welcher der Wandöffnung (10) des Griffrohrs (1) gegenüberliegt und in welchen bei Relativdrehungen zwischen dem Schlauch (3) und dem Griffrohr (1) elektrische Leiter (37) aus der Längenvorratsschleife (40) verlagerbar sind, und
**daß** der Drehwinkel zwischen dem Schlauch (3) und dem Griffrohr (1) nach Maßgabe der Leiterlänge in der Längenvorratsschleife (40) durch Anschläge (11, 12, 22) begrenzt ist.

2. Griffanordnung nach Anspruch 1, **dadurch gekennzeichnet, daß** das Griffteil (2) aus zwei Halbschalen (23, 24) geformt ist, die einerseits das Griffrohr (1) an dessen schlauchseitigem Ende partiell eng umschließen und andererseits auch an das andere Ende des Griffrohrs (1) angeschlossen sind, wobei die beiden Halbschalen (23, 24) einen über das Griffteil (2) durchgehenden Hohlraum (28) bilden, durch welchen die elektrischen Leiter (37) geführt und in der Nähe des Griffrohrs (1) durch einen Kabelhalter (41) festgelegt sind.

3. Griffanordnung nach Anspruch 1 oder 2, **dadurch gekennzeichnet, daß** das Griffrohr (1), das im Bereich der eingeführten Innenmuffe (9) als zylindrischer Endabschnitt (8) ausgebildet ist, daran anschließend bogenförmig geformt ist.

4. Griffanordnung nach Anspruch 1, **dadurch gekennzeichnet, daß** die Wandöffnung (10) des Griffrohrs (1) als etwa um den halben Umfang des Griffrohrs (1) durchgehende schlitzförmige Aussparung ausgebildet ist, deren Endflächen (11, 12) in der Ausgangsrelativstellung von Griffanordnung und Schlauch (3) etwa diametral gegenüberliegend angeordnet sind.

5. Griffanordnung nach Anspruch 1, **dadurch gekennzeichnet, daß** der Aufnahmeraum (13) am Außenumfang der Innenmuffe (9) in axialer Richtung von zwei voneinander beabstandeten flanschartigen Ringvorsprüngen (14, 15) der Innenmuffe (9) und in den radialen Richtungen außen durch die Innenwandfläche (16) des Griffrohrs (1) und innen durch die Außenumfangsfläche (17) der Innenmuffe (9) begrenzt ist.

6. Griffanordnung nach Anspruch 5, **dadurch gekennzeichnet, daß** der Schlauch (3) in an sich bekannter Weise außen nach Art eines Außengewindes schraubenlinienförmig verlaufende Wellenberge (18) und Wellentäler (19 aufweist, und daß dem einen Ringvorsprung (14) der auf die Innenmuffe (9) aufgeschobene Schlauch (3) durch eine auf den Schlauch (3) aufgeschraubte Gewindehülse (20) angepreßt ist, die den Ringvorsprung (14) übergreift und welche ein radial nach außen weisendes Anschlagelement (22) aufweist.

7. Griffanordnung nach Anspruch 6, **dadurch gekennzeichnet, daß** sich das Anschlagelement (22) der Gewindehülse (20) innerhalb der Wandöffnung (10) des Griffrohrs (1) befindet, wobei die beiden Endflächen (11, 12) der Wandöffnung (10) die den Drehwinkel zwischen dem Schlauch (3) und dem Griffrohr (1) begrenzenden Anschlagflächen für das Anschlagelement (22) sind.

8. Griffanordnung nach Anspruch 1, **dadurch gekennzeichnet, daß** sich die elektrischen Leiter (37) des Schlauchs (3) vor Eintritt in die Innenmuffe (9) in einem Rohr (38) befinden, das in die Wandöffnung (10) des Griffrohrs (1) hineinreicht und in einen Aufnahmekanal (39) der Innenmuffe (9) eingelegt ist, der sich in axialer Richtung erstreckt und nach außen offen in die Wand der Innenmuffe (9) eingeformt ist.

9. Griffanordnung nach Anspruch 5, **dadurch gekennzeichnet, daß** die Innenmuffe (9) an ihrem dem Schlauch (3) abgelegenen Ende eine Ringstufe (44) aufweist, auf welcher ein Lippendichtring (45) aufgenommen ist, dessen Dichtlippe (46) der Innenwandfläche (16) des Griffrohrs (1) anliegt.

## Claims

1. Handle arrangement on a vacuum cleaner hose, comprising an inner bushing (9) which is attached to one end of the hose (3) such that it cannot rotate relative to the hose (3) and comprising a handle tube (1) in which the inner bushing (9) is inserted and is sealed therein and fixed such that it can rotate but cannot be displaced in the axial direction, wherein an electrical connection exists between electrical leads (37) of the hose (3) and electrical leads of the handle arrangement even in the case of relative rotations between the hose (3) and the handle tube (1), **characterised**
**in that** the electrical leads (37) are guided outwards from the hose (3) and the inner bushing (9) in an approximately radial direction through a wall opening (10) of the handle tube (1) and into the cavity (28) of a handle part (2) which is connected to the hose-side end of the handle tube (1),
**in that** the electrical leads (37) are fixed so as to form a length reserve loop (40) in the handle part (2),
**in that** a receiving space (13) is provided on the outer circumference of the inner bushing (9), which receiving space is located opposite the wall opening (10) of the handle tube (1) and into which electrical leads (37) from the length reserve loop (40) can be shifted in the case of relative rotations between the hose (3) and the handle tube (1), and
**in that** the rotation angle between the hose (3) and the handle tube (1) is delimited by stops (11, 12, 22) according to the lead length in the length reserve loop (40).

2. Handle arrangement according to claim 1, **characterised in that** the handle part (2) is formed of two half-shells (23, 24) which at one side partially tightly surround the handle tube (1) at its hose-side end and at the other side are also connected to the other end of the handle tube (1), wherein the two half-shells (23, 24) form a cavity (28) passing through the handle part (2), through which cavity the electrical leads (37) are guided and are fixed in the vicinity of the handle tube (1) by a cable holder (41).

3. Handle arrangement according to claim 1 or 2, **characterised in that** the handle tube (1), which in the region of the inserted inner bushing (9) is designed as a cylindrical end section (8), is formed in an arc shape adjacent thereto.

4. Handle arrangement according to claim 1, **characterised in that** the wall opening (10) of the handle tube (1) is designed as a slot-shaped cutout which passes around approximately half the circumference of the handle tube (1) and the end faces (11, 12) of which are arranged approximately diametrically opposite one another in the relative starting position of the handle arrangement and hose (3).

5. Handle arrangement according to claim 1, **characterised in that** the receiving space (13) on the outer circumference of the inner bushing (9) is delimited in the axial direction by two spaced-apart flange-like annular protrusions (14, 15) of the inner bushing (9) and is delimited in the radial directions towards the outside by the inner wall surface (16) of the handle tube (1) and towards the inside by the outer circumferential surface (17) of the inner bushing (9).

6. Handle arrangement according to claim 5, **characterised in that** the hose (3) has, in a manner known per se, corrugation peaks (18) and corrugation troughs (19) running helically around the outside in the manner of an outer thread, and **in that** the hose (3) pushed onto the inner bushing (9) is pressed against one annular protrusion (14) by a threaded sleeve (20) screwed onto the hose (3), which threaded sleeve engages over the annular protrusion (14) and has a stop element (22) pointing radially outwards.

7. Handle arrangement according to claim 6, **characterised in that** the stop element (22) of the threaded sleeve (20) is located within the wall opening (10) of the handle tube (1), wherein the two end faces (11, 12) of the wall opening (10) are the stop faces for the stop element (22) which delimit the rotation angle between the hose (3) and the handle tube (1).

8. Handle arrangement according to claim 1, **characterised in that** the electrical leads (37) of the hose (3), before entering the inner bushing (9), are located in a tube (38) which extends into the wall opening (10) of the handle tube (1) and is placed in a receiving channel (39) of the inner bushing (9) which extends in the axial direction and is integrally formed in the wall of the inner bushing (9) so as to be open towards the outside.

9. Handle arrangement according to claim 5, **characterised in that** the inner bushing (9) has at its end remote from the hose (3) an annular step (44) on which a lipped sealing ring (45) is held, the sealing lip (46) of which bears against the inner wall surface (16) of the handle tube (1).

## Revendications

1. Ensemble de poignée sur un tuyau flexible d'aspirateur, comprenant un manchon intérieur (9) rapporté à une extrémité du tuyau flexible (3) de manière non tournante par rapport au tuyau flexible (3), et comprenant également un tube de poignée (1) dans lequel est inséré le manchon intérieur (9) en y étant fixé de manière étanche et tournante, mais de façon axialement non coulissante, une liaison électrique entre des conducteurs électriques (37) du tuyau (3) et des conducteurs électriques de l'ensemble de poignée étant réalisée même lors de rotations relatives entre le tuyau flexible (3) et le tube de poignée (1), **caractérisé**
**en ce que** les conducteurs électriques (37) sont menés hors du tuyau flexible (3) et du manchon intérieur (9) sensiblement dans la direction radiale, à travers une ouverture de paroi (10) du tube de poignée (1), vers l'extérieur, dans l'espace intérieur creux (28) d'une partie de poignée (2), qui est raccordée à l'extrémité côté tuyau flexible du tube de poignée (1),
**en ce que** les conducteurs électriques (37) sont fixés dans la partie de poignée (2) en formant une boucle de réserve de longueur (40),
**en ce qu'**à la périphérie extérieure du manchon intérieur (9) est prévue une chambre de logement (13), qui est en regard de l'ouverture de paroi (10) du tube de poignée (1), et dans laquelle peuvent venir se placer des conducteurs électriques (37) de la boucle de réserve de longueur (40) lors de rotations relatives entre le tuyau (3) et le tube de poignée (1), et
**en ce que** l'angle de rotation entre le tuyau flexible (3) et le tube de poignée (1) est limité par des butées (11, 12, 22), conformément à la longueur de conducteur disponible dans la boucle de réserve de longueur (40).

2. Ensemble de poignée selon la revendication 1, **caractérisé en ce que** la partie de poignée (2) est formée de deux demi-coques (23, 24), qui d'une part entourent étroitement, en partie, le tube de poignée (1) à son extrémité côté tuyau flexible, et sont d'autre part également raccordées à l'autre extrémité du tube de poignée (1), les deux demi-coques (23, 24) formant un espace intérieur creux (28) continu sur l'étendue de la partie de poignée (2), et à travers lequel sont menés les conducteurs électriques (37) en étant fixés par un serre-câble (41) à proximité du tube de poignée (1).

3. Ensemble de poignée selon la revendication 1 ou la revendication 2, **caractérisé en ce que** le tube de poignée (1), qui, dans la zone du manchon intérieur (9) inséré, est réalisé sous la forme d'un tronçon d'extrémité cylindrique (8), est d'une configuration de forme courbe à la suite.

4. Ensemble de poignée selon la revendication 1, **caractérisé en ce que** l'ouverture de paroi (10) du tube de poignée (1) est réalisée en tant qu'évidement en forme de fente continue sur environ la moitié de la circonférence du tube de poignée (1), et dont les surfaces d'extrémité (11, 12) sont agencées de manière environ diamétralement opposée, dans la position relative initiale de l'ensemble de poignée et du tuyau flexible (3).

5. Ensemble de poignée selon la revendication 1, **caractérisé en ce que** la chambre de logement (13) à la périphérie extérieure du manchon intérieur (9), est délimitée, dans la direction axiale, par deux protubérances annulaires (14, 15) du manchon intérieur (9), en forme de brides et espacées l'une de l'autre, et est délimitée dans les directions radiales, extérieurement par la surface de paroi intérieure (16) du tube de poignée (1), et intérieurement par la surface périphérique extérieure (17) du manchon intérieur (9).

6. Ensemble de poignée selon la revendication 5, **caractérisé en ce que** le tuyau flexible (3) présente extérieurement, de manière connue en soi, des sommets d'onde (18) et des creux d'onde (19) s'étendant selon une ligne en hélice à la manière d'un filetage, et **en ce que** le tuyau flexible (3) emmanché sur le manchon intérieur (9), est pressé contre l'une des protubérances annulaires (14) par une douille filetée (20), qui est vissée sur le tuyau flexible (3), surmonte la protubérance annulaire (14), et présente un élément de butée (22) dirigé radialement vers l'extérieur.

7. Ensemble de poignée selon la revendication 6, **caractérisé en ce que** l'élément de butée (22) de la douille filetée (20) se trouve à l'intérieur de l'ouverture de paroi (10) du tube de poignée (1), les deux surfaces d'extrémité (11, 12) de l'ouverture de paroi (10) étant les deux surfaces de butée pour l'élément de butée (22), qui limitent l'angle de rotation entre le tuyau flexible (3) et le tube de poignée (1).

8. Ensemble de poignée selon la revendication 1, **caractérisé en ce que** les conducteurs électriques (37) du tuyau flexible (3), avant leur entrée dans le manchon intérieur (9), se trouvent dans un tube (38) s'engageant dans l'ouverture de paroi (10) du tube de poignée (1) et placé dans un canal de logement (39) du manchon intérieur (9), qui s'étend dans la direction axiale et est formé dans la paroi du manchon intérieur (9) en étant ouvert vers l'extérieur.

9. Ensemble de poignée selon la revendication 5, **caractérisé en ce que** le manchon intérieur (9) présente, à son extrémité éloignée du tuyau flexible (3), un étagement annulaire (44), sur lequel est montée une bague d'étanchéité à lèvre (45), dont la lèvre d'étanchéité (46) s'appuie contre la surface de paroi intérieure (16) du tube de poignée (1).
